# EUROPÄISCHE PATENTSCHRIFT

(11) **EP 2 513 624 B1**
(45) Veröffentlichungstag und Bekanntmachung des Hinweises auf die Patenterteilung: **30.04.2014**
(21) Anmeldenummer: 10773367.7
(22) Anmeldetag: 09.11.2010
(51) Int. Cl.: G01L 13/00, G01L 15/00, G01F 1/36

(54) **MESSVORRICHTUNG ZUR DIFFERENZDRUCKERMITTLUNG AUS 2 SEPARATEN SENSOREN**
MEASURING DEVICE FOR OBTAINING DIFFERENTIAL PRESSURE FROM TWO SEPARATE SENSORS
DISPOSITIF DE MESURE DE PRESSION DIFFERENTIELLE EN UTILISANT DEUY CAPTEURS SÉPARÉS

(30) Priorität: 17.12.2009 DE 102009054882
(43) Veröffentlichungstag der Anmeldung: 24.10.2012
(73) Patentinhaber: Endress+Hauser GmbH+Co. KG, 79689 Maulburg (DE)
(72) Erfinder: SCHLACHTER, Marc, Wehr 79664 (DE); GIRARDEY, Romuald, Huningue 68330 (FR)
(74) Vertreter: Andres, Angelika Maria
(86) Internationale Anmeldenummer: PCT/EP2010/067151
(87) Internationale Veröffentlichungsnummer: WO 2011/082865

(56) Entgegenhaltungen:
- US-A- 5 870 695
- US-A1- 2007 209 442

## Beschreibung

Die vorliegende Erfindung betrifft eine Messvorrichtung zum Erzeugen einer Folge von Messwerten einer Messgröße anhand von Folgen mindestens zweier Hilfsmessgrößen. Die Messgröße kann insbesondere ein Differenzdruck sein, wobei die erste Hilfsmessgröße ein erster Druck und die zweite Hilfsmessgröße ein zweiter Druck ist, und wobei der Wert des Differenzdrucks durch Differenzbildung zwischen einem Messwerts des ersten Drucks und einem Messwert des zweiten Drucks ermittelt wird.

Derartige Messvorrichtungen sind beispielsweise in der Deutschen Patentanmeldung 102008054913 und in US 2007/0209442 A1 offenbart. Für den Betrieb dieser Art Messvorrichtungen ist die Synchronisierung der Messwerterfassung der ersten Hilfsmessgröße und der zweiten Hilfsmessgröße von Bedeutung, da beispielsweise bei einer Durchflussmessung nach dem Differenzdruckprinzip mit zwei Drucksensoren eine Schwankung des statischen Drucks bei nicht synchronisierter Messwerterfassung als Durchflussschwankung zu interpretieren wäre.

Es ist daher eine Aufgabe der Erfindung, eine gattungsgemäße Messvorrichtung bereitzustellen, welche den zeitlichen Abstand zwischen der Erfassung der Hilfsmessgrößen minimiert.

Die Aufgabe wird erfindungsgemäß gelöst durch die Messvorrichtung gemäß dem unabhängigen Patentanspruch 1.

Die erfindungsgemäße Messvorrichtung zum Erzeugen einer Folge von Messwerten einer Messgröße, welche eine Funktion einer ersten Hilfsmessgröße und mindestens einer zweiten Hilfsmessgröße ist, umfasst einen ersten Messaufnehmer, zum Erfassen und zum Ausgeben einer Folge von Werten der ersten Hilfsmessgröße, mindestens einen zweiten Messaufnehmer, zum Erfassen und zum Ausgeben einer Folge von Werten der zweiten Hilfsmessgröße; eine Auswertungseinheit, zum Berechnen der Folge von Messwerten der Messgröße anhand der Folgen von Werten der ersten Hilfsmessgröße und mindestens der zweiten Hilfsmessgröße; wobei die Messvorrichtung weiterhin eine Steuereinheit aufweist zum Synchronisieren des Erfassens der Folgen der ersten Hilfsmessgröße und mindestens der zweiten Hilfsmessgröße, mittels einer ersten Folge von Steuersignalen, welche an den ersten Messaufnehmer ausgegeben wird, und einer zweiten Folge von Steuersignalen, welche an den zweiten Messaufnehmer ausgegeben wird, wobei mindestens die erste Folge von Steuersignalen unabhängig von der zweiten Folge von Steuersignalen veränderlich ist, wobei eine erste Verarbeitungszeit von dem Erfassen eines aktuellen Werts der ersten Hilfsmessgröße bis zum Ausgeben eines ersten Referenzsignals definiert ist, und eine zweite Verarbeitungszeit von dem Erfassen eines aktuellen Werts der zweiten Hilfsmessgröße bis zum Ausgeben eines zweiten Referenzsignals definiert ist, wobei die Steuereinheit dazu ausgelegt ist, zumindest die jeweiligen Zeitpunkte der Ausgabe des ersten Referenzsignals und des zweiten Referenzsignals zu erfassen und unter Berücksichtigung der ersten und zweiten Verarbeitungszeiten oder einer Differenz zwischen der ersten und der zweiten Verarbeitungszeit das Steuersignal für zumindest einen Messaufnehmer zu variieren, um die Abweichungen zwischen dem Zeitpunkt des Erfassens des jeweils aktuellen Werts der ersten Hilfsmessgröße und zumindest dem Zeitpunkt des Erfassens des jeweils aktuellen Werts der zweiten Hilfsmessgröße zu minimieren.

In einer Weiterbildung der Erfindung repräsentiert das erste Referenzsignal einen aktuellen Wert der ersten Hilfsmessgröße oder eine erste Checksumme, wobei die erste Checksumme insbesondere nach dem aktuellen Wert der ersten Hilfsmessgröße auszugeben ist, und wobei das zweite Referenzsignal einen aktuellen Wert der zweiten Hilfsmessgröße oder eine zweite Checksumme, repräsentiert, wobei die zweite Checksumme insbesondere nach dem aktuellen Wert der zweiten Hilfsmessgröße auszugeben ist.

In einer Weiterbildung der Erfindung umfasst bzw. umfassen der erste und/oder der zweite Messwandler einen ersten und/oder zweiten ASIC, zum Steuern der Wandlung der erfassten Werte der ersten bzw. zweiten Hilfsmessgröße in einen auszugebenden digitalen Wert.

In einer Weiterbildung der Erfindung umfasst bzw. umfassen der ASIC oder die ASICs zur Wandlung eines erfassten Werts und zur Ausgabe eines digitalisierten Werts der ersten und/oder zweiten Hilfsmessgröße einen Zustandsautomaten.

In einer Weiterbildung der Erfindung umfasst die erste Folge von Steuersignalen eine erste Folge von Taktsignalen, und/oder die zweite Folge von Steuersignalen umfasst eine zweite Folge von Taktsignalen umfasst.

In einer Weiterbildung der Erfindung beträgt die erste Verarbeitungszeit eine bestimmte erste Anzahl von Takten der ersten Folge von Taktsignalen, und/oder die zweite Verarbeitungszeit beträgt eine bestimmte zweite Anzahl von Takten der zweiten Folge von Takten. In einer Weiterbildung der Erfindung erfordert ein erster Zustandsautomat eine bestimmte erste Anzahl von Takten der ersten Folge von Taktsignalen, und/oder ein zweiter Zustandsautomat erfordert eine bestimmte zweite Anzahl von Takten der zweiten Folge von Takten.

In einer Weiterbildung der Erfindung weist der erste und/oder der zweite Messwandler einen SAR-, einen Flash- oder einen Delta-Sigma-Wandler auf zum Wandeln der erfassten Werte der jeweiligen Hilfsmessgröße in einen digitalen Wert, welcher von dem jeweiligen Messwandler auszugeben ist.

In einer Weiterbildung der Erfindung ist die erste Hilfsmessgröße ein erster Druck, wobei der erste Messaufnehmer einen ersten Drucksensor umfasst, und die zweite Hilfsmessgröße ist ein zweiter Druck, wobei der zweite Messaufnehmer einen zweiten Drucksensor umfasst, und wobei die Messgröße als Differenz zwischen dem ersten Druck und dem zweiten Druck ermittelt wird.

Die Erfindung wird nun anhand eines in den Zeichnungen dargestellten Ausführungsbeispiels erläutert.

Es zeigt:
- Fig. 1: eine schematische Darstellung einer erfindungsgemäßen Messanordnung; und
- Fig. 2: ein Diagramm des Datenflusses bei der Initialisierung einer erfindungsgemäßen Messanordnung.

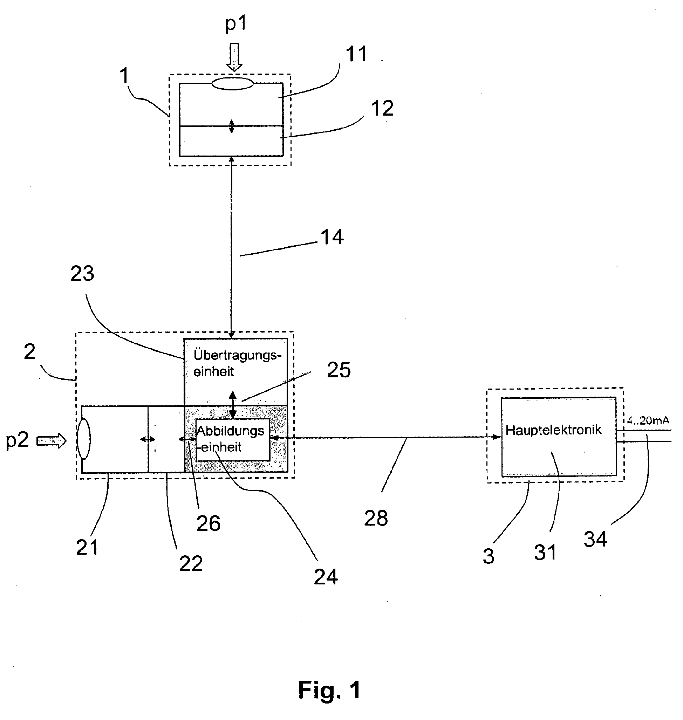

Die in Fig. 1 dargestellte Vorrichtung umfasst als einen ersten Messaufnehmer ein erstes Druckmesswandlermodul 1 und als einen zweiten Messaufnehmer ein zweites Druckmesswandlermodul 2 sowie eine Auswertemodul 3.

Das erste Druckmesswandlermodul 1 enthält einen ersten Drucksensor 11, der mit einem ersten Mediendruck p1 beaufschlagbar ist, und der einen Wandler zum Ausgeben eines den ersten Mediendruck repräsentierenden ersten Primärsignals aufweist, wobei der Wandler beispielsweise ein kapazitiver oder (piezo-) resistiver Wandler sein kann. Weiterhin enthält das Druckmesswandlermodul einen ersten Temperatursensor, welcher eine Temperatur des ersten Drucksensors erfasst, und ein die Temperatur repräsentierendes Temperatursignal ausgibt. Das erste Druckmesswandlermodul enthält weiterhin eine erste Signalaufbereitungsschaltung mit einem ASIC 12, welche das Primärsignal des ersten Drucksensors und ggf. das Temperatursignal zunächst analog aufbereitet und anschließend beide Signale digitalisiert. Die Digitalsignale des ersten Drucks und der ersten Temperatur werden über eine erste externe Kabelverbindung 14 an eine Übertragungseinheit 23 des zweiten Druckmesswandlermoduls 2 übertragen.

Die erste externe Kabelverbindung 14 kann beispielsweise die folgenden Leitungen aufweisen:
- eine Gleichspannungsversorgung V+ zur Speisung des ersten Druckmesswandlermoduls,
- Masse,
- eine Taktsignalleitung, welche ein Taktsignal mit einer Taktfrequenz f1 von dem zweiten Sensormodul an das erste Sensormodul überträgt, und
- eine Datenleitung welche die Digitalsignale des ersten Drucks und der ersten Temperatur beispielsweise mit einer ersten Überragungsrate überträgt.

Sofern dies aufgrund von EMV-Anforderungen nötig ist, kann zur Taktsignalleitung und zur Datenleitung jeweils noch eine Leitung vorgesehen sein die das entsprechende Signal mit umgekehrten Vorzeichen überträgt.

Von der Übertragungseinheit werden die Digitalsignale des ersten Drucks und der ersten Temperatur werden über eine erste interne Verbindung 25 an eine Abbildungseinheit (Mapping Unit) 24 im zweiten Druckmesswandlermodul 2 übertragen.

Das zweite Druckmesswandlermodul 2 enthält neben der bereits erwähnten Übertragungseinheit 23 und der Abbildungseinheit 24 einen zweiten Drucksensor 21, der mit einem zweiten Mediendruck p2 beaufschlagbar ist, und der einen Wandler 22 zum Ausgeben eines den ersten Mediendruck repräsentierenden zweiten Primärsignals aufweist, wobei der Wandler beispielsweise ein kapazitiver oder (piezo-) resistiver Wandler sein kann. Weiterhin enthält das Druckmesswandlermodul einen zweiten Temperatursensor, welcher eine Temperatur des zweiten Drucksensors 21 erfasst, und ein die Temperatur repräsentierendes zweites Temperatursignal ausgibt. Das zweite Druckmesswandlermodul enthält weiterhin eine zweite Signalaufbereitungsschaltung 22, welche das zweite Primärsignal des zweiten Drucksensors und ggf. das zweite Temperatursignal zunächst analog aufbereitet und anschließend beide Signale digitalisiert. Von der zweiten Signalaufbereitungsschaltung Die Digitalsignale des zweiten Drucks und der zweiten Temperatur werden über eine zweite interne Kabelverbindung 26 an die Abbildungseinheit 24 übertragen.

Bei den ersten und zweiten internen Kabelverbindungen 25, 26 kann aufgrund der Kurzen Übertragungsstrecke jedenfalls auf die symmetrisierenden gegenphasigen Leitungen des Taktsignals und des Datensignals verzichtet werden. Hier sind neben der Energieversorgung jeweils nur eine Datenleitung mit der ersten Übertragungsrate und eine Taktleitung mit der Taktfrequenz f1 vorgesehen.

Die Abbildungseinheit 24 enthält einen nicht dargestellten Mikrokontroller oder ein FPGA welcher bzw. welches einerseits das Taktsignal zum ersten Druckmesswandlermodul 1 bereitstellt und andererseits die eingehenden Digitalsignale des ersten Drucks und der ersten Temperatur sowie des zweiten Drucks und der zweiten Temperatur erfasst und Signale, welche Informationen über den ersten Druck und den zweiten Druck sowie die erste und die zweite Temperatur enthalten, zur Übertragung an das Auswertemodul 3 ausgibt. Die Übertragung zum Auswertemodul erfolgt über eine zweite externe Kabelverbindung 28, welche beispielsweise die folgenden Leitungen umfasst:
- eine Gleichspannungsversorgung V+ zur Speisung des zweiten Druckmesswandlermoduls,
- Masse,
- eine Taktsignalleitung, welche ein Taktsignal mit der Frequenz von f1 von dem Auswertemodul an das zweite Sensormodul überträgt, und
- eine Datenleitung welche die Signale von der Abbildungseinheit 24 mit der einfachen ersten Übertragungsrate oder mit der halbierten ersten Übertragungsrate an das Auswertemodul überträgt.

Das Auswertemodul 3 enthält die Hauptelektronik mit einem Mikrokontroller zur Berechnung der Differenz zwischen dem ersten Mediendruck und dem zweiten Mediendruck sowie eine Versorgungsschaltung zum Anschluss an eine Zweidrahtschleife, auf welche die errechnete Druckdifferenz als 4 ... 20 mA-Stromsignal ausgegeben wird.

Weiterhin kann der Mikrokontroller vor der Differenzbildung die empfangenen Druckmesswerte für den ersten Druck und den zweiten Druck in Abhängigkeit von den zugehörigen Temperaturmesswerten mit einem Kompensationsalgorithmus korrigieren.

Die Versorgungsschaltung stellt die Versorgungsspannungen für die Hauptelektronik und für die angeschlossenen Module bereit. Weiterhin enthält die Hauptelektronik ein HART-Modem, um dem Stromsignal ggf. Digitalsignale aufzumodulieren, welche einen oder mehrere der folgenden Messwerte repräsentieren: den ersten Druck, den zweiten Druck, den Differenzdruck, die erste Temperatur und die zweite Temperatur. Weiterhin können dem Auswertemodul über das HART-Modem Steuerkommandos übertragen werden.

Wesentlich für die Erfindung ist die Synchronisierung der Messwerterfassung des ersten Drucksensors und des zweiten Drucksensors. Hierzu dient die Abbildungseinheit 24, welche die aufbereiteten Signale der beiden ASICS 12, 22 der Druckmesswandlermodule 1, 2 empfängt als Steuereinheit. Die zwischen dem ersten ASIC 12 und der Abbildungseinheit 24 angeordnete Übertragungseinheit 23 führt allenfalls zu einer praktisch vernachlässigbaren Verzögerung in der Datenübertragung vom ersten ASIC 12 zur Abbildungseinheit 24.

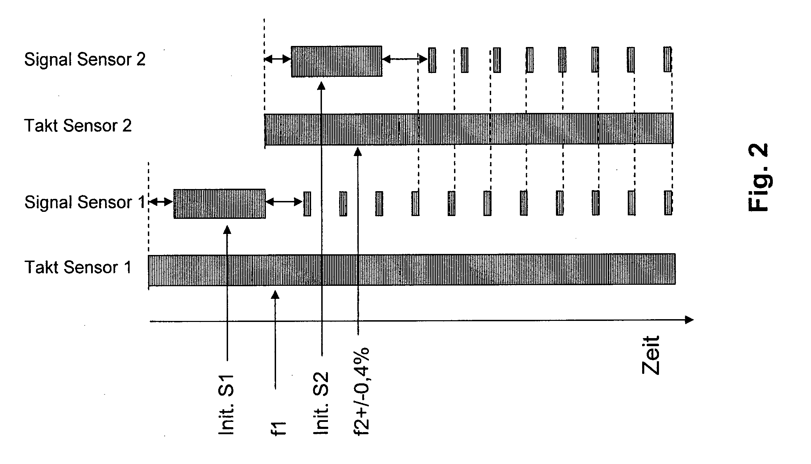

Der zeitliche Verlauf der zur Synchronisierung relevanten Signale wird nun anhand von Fig. 2 erläutert. Bei der Initialisierung der Messvorrichtung sendet die Steuereinheit 24 zunächst ein erstes Taktsignal mit beispielsweise einigen zehn kHz als erste Folge von Steuersignalen an einen der beiden ASICS, beispielsweise den ersten ASIC 12. Nach einer nicht exakt definierten Toleranzzeit von etwa einigen zehn Millisekunden sendet der erste ASIC 12 seinen Initialisierungscode mit einer Länge von einigen 100 byte. Nach einer weiteren nicht exakt definierten Toleranzzeit beginnt der erste ASIC 12 mit der Übertragung von Messwerttelegrammen, die dann in einer regelmäßigen Folge ausgegeben werden, wobei die exakte Folgefrequenz der Messwerttelegramme eine Funktion des ersten Takts ist.

Nach Empfang des vollständigen Initialisierungscodes des ersten ASICs 12 beginnt die Steuereinheit 24 ein zweites Taktsignal als zweite Folge von Steuersignalen an den zweiten ASIC 22 zu senden, wobei das zweite Taktsignal zunächst beispielsweise etwa die gleiche Frequenz aufweist wie das erste Taktsignal. Ebenfalls nach einer nicht exakt definierten Toleranzzeit von etwa einigen zehn Millisekunden sendet der zweite ASIC 22 nun seinen Initialisierungscode mit einer Länge von einigen 100 byte. Nach einer weiteren nicht exakt definierten Toleranzzeit beginnt nun auch der zweite ASIC 22 mit der Übertragung von Messwerttelegrammen, die dann in einer regelmäßigen Folge ausgegeben werden, wobei hier die exakte Folgefrequenz der Messwerttelegramme eine Funktion des zweiten Takts ist.

Ohne eine weitere Synchronisierung der Messwerttelegramme würden die jeweils aktuellen Messwerte des ersten Drucksensors und des zweiten Drucksensors in einer zeitlich undefinierten Beziehung zueinander stehen, wie anhand eines Vergleichs der Empfangszeiten ersten Messwerttelegramme des zweiten Sensors in mit den Messwerttelegrammen des ersten Sensors erkennbar ist. Durch Variation der Frequenz eines der Taktsignale, beispielsweise des zweiten Taktsignals um beispielsweise bis zu +/- 1 % oder bis zu +/- 0,4%, kann kurzfristig eine Synchronisierung der Messwerttelegramme erreicht werden.

Als Maß für die zeitlichen Abweichungen zwischen den Messwerttelegrammen können jeweils die Anstiegsflanken der Messwerttelegramme oder deren Enden miteinander verglichen werden. Ein Vergleich der Enden ist insoweit vorteilhaft, als ein Messwerttelegramm gewöhnlich am Ende eine Checksumme enthält, was bewirkt, dass mit der Synchronisierung auf das Ende der Checksumme zugleich eine Synchronisierung auf die Validierung des jeweiligen Messwerttelegramms erfolgt.

Die Synchronisierung der Messwerterfassung über die Messwerttelegramme ist selbstverständlich nur dann gerechtfertigt, wenn die Messwerttelegramme in einer festen zeitlichen Beziehung zur Messwerterfassung stehen, also wenn definierte Verarbeitungszeiten gegeben sind. Dies ist insbesondere dann der Fall, wenn die Aufbereitung der Messwerte über einen Zustandsautomaten in einer definierten Anzahl von Takten erfolgt.

Im vorliegenden Fall weisen der erste Druckmesswandler und der zweite Druckmesswandler identische Verarbeitungszeiten auf. Weshalb eine Synchronisierung der Messwerterfassung hier eine Synchronisierung der Messwerttelegramme erfordert. Bei ungleichen, aber dennoch definierten Verarbeitungszeiten t₁, t₂, mit beispielsweise t₂ > t₁ ist eine entsprechende Verzögerung t_{verz} := t₂ - t₁ vorzusehen, mit der die Messwerttelegramme der zweiten Hilfsmessgröße nach den Messwerttelegrammen der ersten Hilfsmessgröße zu empfangen sind.

## Patentansprüche

1. Messvorrichtung zum Erzeugen einer Folge von Messwerten einer Messgröße, welche eine Funktion einer ersten Hilfsmessgrößen und mindestens einer zweiten Hilfsmessgröße ist; umfassend:
einen ersten Messaufnehmer (1), zum Erfassen und zum Ausgeben einer Folge von Werten der ersten Hilfsmessgröße;
mindestens einen zweiten Messaufnehmer (2), zum Erfassen und zum Ausgeben einer Folge von Werten der zweiten Hilfsmessgröße;
eine Auswertungseinheit (3), zum Berechnen der Folge von Messwerten der Messgröße anhand der Folgen von Werten der ersten Hilfsmessgröße und mindestens der zweiten Hilfsmessgröße;
**dadurch gekennzeichnet, dass** die Messvorrichtung eine Steuereinheit (24) aufweist zum Synchronisieren des Erfassens der Folgen der ersten Hilfsmessgröße und mindestens der zweiten Hilfsmessgröße, mittels einer ersten Folge von Steuersignalen, welche an den ersten Messaufnehmer (1) ausgegeben wird, und einer zweiten Folge von Steuersignalen, welche an den zweiten Messaufnehmer (2) ausgegeben wird, wobei mindestens die erste Folge von Steuersignalen unabhängig von der zweiten Folge von Steuersignalen veränderlich ist,
wobei eine erste Verarbeitungszeit von dem Erfassen eines aktuellen Werts der ersten Hilfsmessgröße bis zum Ausgeben eines ersten Referenzsignals definiert ist, wobei eine zweite Verarbeitungszeit von dem Erfassen eines aktuellen Werts der zweiten Hilfsmessgröße bis zum Ausgeben eines zweiten Referenzsignals definiert ist,
und dass die Steuereinheit dazu ausgelegt ist, zumindest die jeweiligen Zeitpunkte der Ausgabe des ersten Referenzsignals und des zweiten Referenzsignals zu erfassen und unter Berücksichtigung der ersten und zweiten Verarbeitungszeiten oder einer Differenz zwischen der ersten und der zweiten Verarbeitungszeit das Steuersignal für zumindest einen Messaufnehmer zu variieren, um die Abweichungen zwischen dem Zeitpunkt des Erfassens des jeweils aktuellen Werts der ersten Hilfsmessgröße und zumindest dem Zeitpunkt des Erfassens des jeweils aktuellen Werts der zweiten Hilfsmessgröße zu minimieren.

2. Messvorrichtung nach Anspruch 1, wobei das erste Referenzsignal einen aktuellen Wert der ersten Hilfsmessgröße oder eine erste Checksumme, repräsentiert, wobei die erste Checksumme insbesondere nach dem aktuellen Wert der ersten Hilfsmessgröße auszugeben ist, und
wobei das zweite Referenzsignal einen aktuellen Wert der zweiten Hilfsmessgröße oder eine zweite Checksumme, repräsentiert, wobei die zweite Checksumme insbesondere nach dem aktuellen Wert der zweiten Hilfsmessgröße auszugeben ist.

3. Messvorrichtung nach einem der vorhergehenden Ansprüche, wobei der erste und/oder der zweite Messwandler einen ersten und/oder zweiten ASIC, zum Steuern der Wandlung der erfassten Werte der ersten bzw. zweiten Hilfsmessgröße in einen auszugebenden digitalen Wert.

4. Messvorrichtung nach Anspruch 3, wobei der ASIC oder die ASICs zur Wandlung eines erfassten Werts und zur Ausgabe eines digitalisierten Werts der ersten und/oder zweiten Hilfsmessgröße einen Zustandsautomaten aufweist bzw. aufweisen.

5. Messvorrichtung nach einem der vorhergehenden Ansprüche, wobei die erste Folge von Steuersignalen eine erste Folge von Taktsignalen umfasst, und/oder wobei die zweite Folge von Steuersignalen eine zweite Folge von Taktsignalen umfasst.

6. Messvorrichtung nach Anspruch 5 und Anspruch 1, wobei die erste Verarbeitungszeit eine bestimmte erste Anzahl von Takten der ersten Folge von Taktsignalen beträgt und/oder wobei die zweite Verarbeitungszeit eine bestimmte zweite Anzahl von Takten der zweiten Folge von Takten beträgt.

7. Messvorrichtung nach Ansprüchen 6 und 4, wobei ein erster Zustandsautomat eine bestimmte erste Anzahl von Takten der ersten Folge von Taktsignalen erfordert, und/oder wobei ein zweiter Zustandsautomat eine bestimmte zweite Anzahl von Takten der zweiten Folge von Takten erfordert.

8. Messvorrichtung nach einem der vorhergehenden Ansprüche, wobei der erste und/oder der zweite Messwandler einen SAR-, einen Flash- oder einen Delta-Sigma-Wandler aufweist zum Wandeln der erfassten Werte der jeweiligen Hilfsmessgröße in einen digitalen Wert, welcher von dem jeweiligen Messwandler auszugeben ist.

9. Messvorrichtung nach einem der vorhergehenden Ansprüche, wobei die erste Hilfsmessgröße ein erster Druck ist, und der erste Messaufnehmer einen ersten Drucksensor umfasst, wobei die zweite Hilfsmessgröße ein zweiter Druck ist und der zweite Messaufnehmer einen zweiten Drucksensor umfasst, und wobei die Messgröße als Differenz zwischen dem ersten Druck und dem zweiten Druck ermittelt wird.

## Claims

1. Measuring unit designed to generate a series of measured values of a measured variable, which is a function of a first auxiliary measured variable and at least a second auxiliary measured variable; comprising
a first sensor (1) designed to measure and output a series of values of the first auxiliary measured variable;
at least a second sensor (2) designed to measure and output a series of values of the second auxiliary measured variable;
an evaluation unit (3) designed to calculate the series of measured values of the measured variable using the series of values of the first auxiliary measured variable and at least the second auxiliary measured variable;
**characterized in that** the measuring unit has a control unit (24) designed to synchronize the measurement of the series of the first auxiliary measured variable and at least of the second auxiliary measured variable using a first series of control signals which is output at the first sensor (1), and a second series of control signals which is output at the second sensor (2), wherein at least the first series of control signals is variable in a manner that is independent of the second series of control signals,
wherein a first processing time is defined from the moment a current value of the first auxiliary measured variable is measured to the moment that a first reference signal is output, wherein a second processing time is defined from the moment a current value of the second auxiliary measured variable is measured to the moment that a second reference signal is output,
and **in that** the control unit is designed to record at least the particular times when the first reference signal and the second reference signal are output and, taking into consideration the first and second processing times or a difference between the first and second processing time, to vary the control signal for at least one sensor in order to minimize the deviations between the time of recording the current value of the first auxiliary measured variable and at least the time of recording the current value of the second auxiliary measured variable.

2. Measuring unit as claimed in Claim 1, wherein the first reference signal represents a current value of the first auxiliary measured variable or a first checksum, wherein the first checksum must be output particularly after the current value of the first auxiliary measured variable, and
wherein the second reference signal represents a current value of the second auxiliary measured variable or a second checksum, wherein the second checksum must be output particularly after the current value of the second auxiliary measured variable.

3. Measuring unit as claimed in one of the previous claims, wherein the first and/or the second transducer has/have a first and/or a second ASIC for controlling the conversion of the measured values of the first or second auxiliary measured variable to a digital value which is to be output.

4. Measuring unit as claimed in Claim 3, wherein the ASIC or ASICs has/have a state machine for converting a recorded value and outputting a digitized value of the first and/or the second auxiliary measured variable.

5. Measuring unit as claimed in one of the previous claims, wherein the first series of control signals comprises a first series of pulse signals and/or wherein the second series of control signals comprises a second series of pulse signals.

6. Measuring unit as claimed in Claim 5 and Claim 1, wherein the first processing time involves a certain first number of pulses of the first series of pulse signals and/or wherein the second processing time involves a certain second number of pulses of the second series of pulses.

7. Measuring unit as claimed in Claims 6 and 4, wherein a first state machine requires a certain first number of pulses of the first series of pulse signals and/or wherein a second state machine requires a certain second number of pulses of the second series of pulses.

8. Measuring unit as claimed in one of the previous claims, wherein the first and/or the second transducer has a SAR, flash or delta sigma converter for converting the measured values of the individual auxiliary measured variable to a digital value which must be output by the individual transducer.

9. Measuring unit as claimed in one of the previous claims, wherein the first auxiliary measured variable is a first pressure and the first sensor comprises a first pressure sensor, wherein the second auxiliary measured variable is a second pressure and the second sensor comprises a second pressure sensor and wherein the measured variable is determined as the difference between the first pressure and the second pressure.

## Revendications

1. Dispositif de mesure destiné à la génération d'une séquence de valeurs mesurées d'une grandeur mesurée, laquelle est une fonction d'une première grandeur mesurée auxiliaire et au moins d'une deuxième grandeur mesurée auxiliaire ; comprenant
un premier transmetteur de mesure (1) destiné à la mesure et à la sortie d'une séquence de valeurs de la première grandeur mesurée auxiliaire ;
au moins un deuxième transmetteur de mesure (2) destiné à la mesure et à la sortie d'une séquence de valeurs de la deuxième grandeur mesurée auxiliaire ;
une unité d'évaluation (3) destinée au calcul de la séquence de valeurs mesurées de la grandeur mesurée sur la base des séquences de valeurs de la première grandeur mesurée auxiliaire et au moins de la deuxième grandeur mesurée auxiliaire ;
**caractérisé en ce que** le dispositif de mesure comporte une unité de commande (24) destinée à la synchronisation de la mesure des séquences de la première grandeur mesurée auxiliaire et au moins de la deuxième grandeur mesurée auxiliaire, au moyen d'une première séquence de signaux de commande, lesquels sont sortis sur le premier transmetteur de mesure (1), et d'une deuxième séquence de signaux de commande, lesquels sont sortis sur le deuxième transmetteur de mesure (2), dispositif pour lequel au moins la première séquence de signaux de commande est variable indépendamment de la deuxième séquence de signaux de commande,
un premier temps de traitement, allant de la mesure d'une valeur actuelle de la première grandeur mesurée auxiliaire à la sortie d'un premier signal de référence, étant défini ; un deuxième temps de traitement, allant de la mesure d'une valeur actuelle de la deuxième grandeur mesurée auxiliaire à la sortie d'un deuxième signal de référence, étant défini,
et **en ce que** l'unité de commande est conçue de telle sorte à détecter au moins les instants de sortie respectifs du premier signal de référence et du deuxième signal de référence et, en tenant compte du premier et du deuxième temps de traitement ou d'une différence entre le premier et le deuxième temps de traitement, de telle sorte à varier le signal de commande pour au moins un transmetteur de mesure, afin de minimiser les écarts entre l'instant de la mesure de la valeur actuelle respective de la première grandeur mesurée auxiliaire et au moins l'instant de la mesure de la valeur actuelle respective de la deuxième grandeur mesurée auxiliaire.

2. Dispositif de mesure selon la revendication 1, pour lequel le premier signal de référence représente une valeur actuelle de la première grandeur mesurée auxiliaire ou une première somme de contrôle, la première somme de contrôle devant être affichée notamment après la valeur actuelle de la première grandeur mesurée auxiliaire, et
pour lequel le deuxième signal de référence représente une valeur actuelle de la deuxième grandeur mesurée auxiliaire ou une deuxième somme de contrôle, la deuxième somme de contrôle devant être affichée notamment après la valeur actuelle de la deuxième grandeur mesurée auxiliaire.

3. Dispositif de mesure selon l'une des revendications précédentes, pour lequel le premier et/ou le deuxième convertisseur de mesure comporte(nt) un premier ASIC et/ou un deuxième ASIC, destiné à commander la conversion des valeurs mesurées de la première et de la deuxième grandeur mesurée auxiliaire en une valeur numérique à sortir.

4. Dispositif de mesure selon la revendication 3, pour lequel l'ASIC ou les ASIC présente(nt) un automate d'état en vue de la conversion d'une valeur mesurée et en vue de la sortie d'une valeur numérisée de la première et de la deuxième grandeur mesurée auxiliaire.

5. Dispositif de mesure selon l'une des revendications précédentes, pour lequel la première séquence de signaux de commande comprend une première séquence de signaux pulsés et/ou pour lequel la deuxième séquence de signaux de commande comprend une deuxième séquence de signaux pulsés.

6. Dispositif de mesure selon la revendication 5 et la revendication 1, pour lequel le premier temps de traitement comprend un nombre déterminé d'impulsions de la première séquence de signaux pulsés et/ou pour lequel le deuxième temps de traitement comprend un nombre déterminé d'impulsions de la deuxième séquence de signaux pulsés.

7. Dispositif de mesure selon les revendications 6 et 4, pour lequel un premier automate d'état exige un premier nombre déterminé d'impulsions de la première séquence de signaux pulsés et/ou pour lequel un deuxième automate d'état exige un deuxième nombre déterminé d'impulsions de la deuxième séquence de signaux pulsés.

8. Dispositif de mesure selon l'une des revendications précédentes, pour lequel le premier et/ou le deuxième convertisseur de mesure comprend un convertisseur à approximations successives, un convertisseur flash ou un convertisseur Delta Sigma, destiné à la conversion des valeurs mesurées de la grandeur mesurée auxiliaire respective en une valeur numérique, laquelle doit être sortie par le convertisseur de mesure correspondant.

9. Dispositif de mesure selon l'une des revendications précédentes, pour lequel la première grandeur mesurée auxiliaire est une première pression, et le premier transmetteur de pression comprend un premier capteur de pression, pour lequel la deuxième grandeur mesurée auxiliaire est une deuxième pression, et le deuxième transmetteur de pression comprend un deuxième capteur de pression, et pour lequel la grandeur mesurée est déterminée en tant que différence entre la première pression et la deuxième pression.
